# EUROPÄISCHE PATENTSCHRIFT

(11) **EP 3 259 981 B1**
(45) Veröffentlichungstag und Bekanntmachung des Hinweises auf die Patenterteilung: **07.08.2019**
(21) Anmeldenummer: 17177570.3
(22) Anmeldetag: 23.06.2017
(51) Int. Cl.: A01G 9/08

(54) **BOHRER ZUM MASCHINELLEN ERSTELLEN VON PFLANZLÖCHERN**
DRILL FOR AUTOMATED CREATION OF HOLES FOR PLANTS
FORET POUR FABRICATION À LA MACHINE DE TROUS POUR PLANTES

(30) Priorität: 23.06.2016 DE 102016111551
(43) Veröffentlichungstag der Anmeldung: 27.12.2017
(73) Patentinhaber: Phytowelt GreenTechnologies GmbH, 41334 Nettetal (DE)
(72) Erfinder: Balster, Hans-Joachim, 46282 Dorsten (DE)
(74) Vertreter: Gesthuysen Patent- und Rechtsanwälte

(56) Entgegenhaltungen:
- DE-A1- 1 782 509
- US-A- 2 826 003
- US-A1- 2003 196 373
- US-A1- 2012 285 580

## Beschreibung

Die Erfindung betrifft einen Bohrer zum maschinellen Erstellen von Pflanzlöchern in Töpfen, die mit Substrat gefüllten sind, mit einem Anschlussschaft und mit einem Bohrkörper, wobei der Bohrkörper einen wendelförmigen Spiralgang aufweist. Daneben betrifft die Erfindung auch ein Verfahren zum Erstellen eines Pflanzlochs mit einem entsprechenden Bohrer in einem mit Substrat gefüllten Topf.

Um eine Pflanze in einen Topf einsetzen zu können, der vollständig mit Substrat gefüllt ist, muss zunächst ein Pflanzloch in dem Substrat erzeugt werden, wozu entsprechendere Bohrer verwendet werden. Hierzu weisen die Bohrer einen Anschlussschaft und einen Bohrkörper auf, wobei der Bohrer mittels des Anschlussschaftes an einer entsprechenden Maschine befestigt werden kann. Der Bohrkörper weist einen wendelförmigen Spiralgang auf, mit dessen Hilfe das Pflanzloch im Substrat erzeugt wird. Die Länge und der Durchmesser des Bohrkörpers richten sich dabei nach den Abmessungen des Topfes sowie der Größe der Pflanze bzw. des Pflanzballens, die in dem Topf eingepflanzt werden soll.

Ein derartiger Bohrer ist beispielsweise aus der DE 1 782 509 A1 bekannt. Der Bohrkörper weist dabei einen vom verjüngten unteren Ende des Bohrkörpers bis zu seinem oberen Ende durchlaufenden, aufsteigenden, schneckenförmigen Spiralgang auf, mit dem auf einfache Art und Weise ein entsprechendes Pflanzloch in einem mit Substrat gefüllten Topf eingebracht werden kann. Durch Umkehren der Drehrichtung kann darüber hinaus ein Verdichten des Substrats im Topf bewirkt werden, was sich beim Umtopfen von einer Topfgröße auf eine etwas größere Topfgröße als vorteilhaft erwiesen hat. Der bekannte Bohrer kann zusammen mit anderen Bohrern an einer Vielfach-Bohreinheit angeordnet sein, die eine gemeinsame Antriebsvorrichtung aufweist, so dass gleichzeitig in mehreren Topfen jeweils ein Pflanzloch mit jeweils einem Bohrer erzeugt werden kann.

Bei der industriellen Erstellung von bepflanzten Töpfen werden entsprechende Bohrer als Teil einer Topfmaschine eingesetzt, die neben einem Substratbunker, einem Topfmagazin, einem Elevator und einem Förderband auch eine Bohrstation aufweist. Das Substrat wird dabei schrittweise über ein Förderband vom Substratbunker zum Elevator gebracht, der die aus dem Topfmagazin vereinzelten Töpfe nacheinander mit dem Substrat befüllt. Danach wird der gefüllte Topf mit Hilfe einer entsprechenden Transportvorrichtung zur Bohrstation transportiert, wo der Bohrer ein Pflanzloch in den Topf bzw. das in dem Topf eingefüllte Substrat macht. Anschließend werden in die einzelnen Töpfe manuell oder mittels einer weiteren Maschine die einzelnen Jungpflanzen eingesetzt. Mit Hilfe derartiger Topfmaschinen kann eine Mehrzahl von Töpfen in kurzer Zeit bepflanzt werden, wobei die Anzahl der erforderlichen manuellen Arbeitsschritte reduziert ist. Die so erstellten bepflanzten Töpfe können dann verpackt und an den Großhandel oder einzelne Gartencenter ausgeliefert werden.

Da bei den in der Praxis eingesetzten Topfmaschinen die vereinzelten Töpfe zunächst vollständig mit Substrat gefüllt werden, kann es auf der Oberseite des Topfes bzw. des Substrats zur Ausbildung von Unkraut und Moos kommen. Um dies zu verhindern, muss nach dem Einsetzten der Jungpflanze in das Pflanzloch die obere Schicht des Substrats abgetragen und beispielsweise durch Rindenmulch oder Kompost ersetzt werden. Dies führt dazu, dass sich der benötigte Zeitaufwand beim Bepflanzen der Töpfen deutlich erhöht und außerdem ein zusätzlicher manueller Arbeitsschritt erforderlich ist.

Der vorliegenden Erfindung liegt daher die Aufgabe zugrunde, einen Bohrer zum maschinellen Erstellen von Pflanzlöchern sowie ein entsprechendes Verfahren zur Verfügung zu stellen, mit dem auf einfache und effektive Art und Weise eine Bepflanzung von mit Substrat gefüllten Töpfen ermöglicht wird.

Diese Aufgabe ist bei dem erfindungsgemäßen Bohrer mit den Merkmalen des Patentanspruchs 1 dadurch gelöst, dass zwischen dem Anschlussschaft und dem Spiralgang mindestens ein Schaufelelement angeordnet ist, dessen radiale Erstreckung größer als die maximale radiale Erstreckung des Spiralganges ist, wobei das Schaufelelement einen Neigungswinkel β größer Null aufweist.

Der erfindungsgemäße Bohrer weist somit neben dem wendelförmigen Spiralgang zur Erstellung eines Pflanzloches mit dem Schaufelelement noch ein weiteres Element auf, mit dem beim Bohrvorgang eine obere Schicht des in dem Topf eingeführten Substrats aus dem Topf entfernt wird. Hierzu weist das Schaufelelement eine radiale Erstreckung auf, die vorzugsweise dem Innenradius des Topfes, in dem das Pflanzloch erzeugt werden soll, entspricht, so dass die gesamte obere Schicht des Substrats von dem Schaufelelement aus dem Topf herausgehoben wird. Der Neigungswinkel β des Schaufelelements beträgt dabei vorzugsweise zwischen 10° und 30°, so dass einerseits pro Umdrehung des Bohrers eine ausreichende Menge an Substrat aus dem Topf herausgehoben wird, andererseite das "schräg" gestellte Schaufelelement die Drehung des Bohrer zur Erzeugung des Pflanzloches nicht zu stark behindert.

Dabei ist besonders vorteilhaft, dass der Abtrag einer oberen Substratschicht automatisch beim Erstellen des Pflanzloches erfolgt, so dass beide Vorgänge in einem Arbeitsschritt durchgeführt werden. Wird der Bohrer im Betrieb in den mit Substrat gefüllten Topf abgesenkt, so wird durch den wendelförmigen Spiralgang, der am dem Anschlussschaft abgewandten Ende des Bohrers beginnt, in bekannter Weise ein Pflanzloch erzeugt. Gleichzeitig wird durch das sich mit dem Bohrer drehende Schaufelelement eine obere Schicht des Substrats abgehoben, so dass in dem Topf ein oberer freier Rand entsteht, der nach dem Einsetzen der Pflanze in das Pflanzloch beispielsweise mit Rindenmulch gefüllt werden kann. Darüber hinaus weist der erfindungsgemäße Bohrer den Vorteil auf, dass er einfach anstelle eines bisher bei Topfmaschinen verwendeten Bohrers eingesetzt werden kann, so dass ein Nachrüsten bestehender Topfmaschinen ohne größeren Aufwand möglich ist.

Gemäß einer bevorzugten Ausgestaltung des erfindungsgemäßen Bohrers weist dieser zwei Schaufelelemente auf, die auf einander gegenüberliegenden Seiten der Längsachse L des Bohrers zwischen dem Anschlussschaft und dem Spiralgang angeordnet sind. Die beiden Schaufelelemente sind dabei vorzugsweise derart auf gleicher Höhe angeordnet, dass sich das untere Ende der beiden Schaufelelemente auf einer Ebene befindet. Durch die Ausbildung von zwei Schaufelelementen erfolgt ein schneller und gleichmäßiger Abtrag der oberen Substratschicht. Darüber hinaus ist auch die Herstellung von zwei Schaufelelementen mit relativ geringem Aufwand verbunden. Grundsätzlich besteht jedoch auch die Möglichkeit, dass mehr als zwei Schaufelelemente, beispielsweise drei oder vier Schaufelelemente, vorgesehen sind, wobei die einzelnen Schaufelelemente vorzugsweise im Wesentlichen gleiche Abmessungen aufweisen.

Gemäß einer weiteren vorteilhaften Ausgestaltung sind die einzelnen Schaufelelemente kreisbogenförmig ausgebildet, wobei bei zwei Schaufelelementen der Zentriwinkel α der Schaufelelemente jeweils vorzugsweise zwischen 80° und 130°, insbesondere zwischen 100° und 120° beträgt.

Gemäß einer weiteren besonders bevorzugten Ausgestaltung des erfindungsgemäßen Bohrers ist das mindestens eine Schaufelelement lösbar am Bohrer befestigt. Dadurch besteht die Möglichkeit, einen Bohrer durch Austausch des Schaufelelements auf einfache Art und Weise an Töpfe mit unterschiedlichen Durchmessern anzupassen. Vorzugsweise entspricht nämlich die radiale Erstreckung der Schaufelelemente, gemessen von der Mittelachse des Bohrers, dem Innenradius des Topfes, bei dem der Bohrer eingesetzt werden soll. Dadurch ist gewährleistet, dass Substrat von der gesamten Oberfläche abgehoben wird, so dass nach dem Bohrvorgang eine ebene Substratoberfläche gegeben ist und kein überstehender Substratrand an der Innenwandung des Topfes verbleibt.

Durch die lösbare Befestigung der Schaufelelemente am Bohrer ist nicht nur eine einfache Anpassung eines Bohrers an die jeweilige Topfgröße bzw. den jeweiligen Topfdurchmesser möglich, sondern es ist auch die Möglichkeit geschaffen, einen bereits bestehenden Bohrer mit geringem Aufwand nachzurüsten. Gemäß einer besonders bevorzugten Ausgestaltung sind dazu zwei Schaufelelemente an einem ringförmigen Stützelement befestigt, wobei das Stützelement lösbar mit dem Anschlussschaft des Bohrers befestigt ist. Das ringförmige Stützelement kann dann mit seiner durchgehenden Innenbohrung einfach auf den Anschlussschaft des Bohrers aufgesteckt und anschließend beispielsweise mithilfe einer Schraube, die in radialer Richtung durch das Stützelement durchgeschraubt und in den Anschlussschaft eingeschraubt wird, fixiert werden.

Das erfindungsgemäße Verfahren zum Erstellen eines Pflanzlochs in einem mit Substrat gefüllten Topf mit einem Bohrer weist gemäß Patentanspruch 7 als ersten Schritt zunächst das Positionieren des mit Substrat gefüllten Topfes auf einer Topfauflage auf. Bei der Topfauflage kann es sich beispielsweise um einen Teil einer Transportvorrichtung einer Topfmaschine handeln, durch die der Topf von der Befüllstation zur Bohrstation verbracht wird. Ebenso kann es sich bei der Topfauflage um eine stationäre Auflage oder Aufnahme in der Bohrstation handeln, auf die der mit Substrat befüllte Topf beispielsweise mittels eines Greifarms oder Schiebers positioniert wird.

Die Topfauflage ist dabei so zur Bohrstation bzw. zum Bohrer positioniert, dass ein auf der Topfauflage positionierter Topf richtig zum Bohrer ausgerichtet ist, damit mit Hilfe des Bohrers ein Pflanzloch in dem mit Substrat gefüllten Topf erzeugt werden kann. Hierzu wird gemäß einem zweiten Schritt des Verfahrens der sich drehende Bohrer aus einer oberhalb des Topfes angeordneten Ausgangsosition in eine Position abgesenkt, in der sich die Unterkante des mindestens einen Schaufelelements des Bohrers unterhalb des oberen Randes des Topfes befindet. Der sich drehende Bohrer wird somit mit seinem wendelförmigen Spiralgang und mit seinem mindestens einen Schaufelelement in das im Topf angeordnete Substrat abgesenkt, wodurch ein Pflanzloch erstellt und die obere Schicht des Substrats aus dem Topf entfernt wird. Anschließend wird der Bohrer wieder in eine Position angehoben, in der sich das freie Ende des Spiralganges oberhalb des oberen Randes des Topfes befindet, so dass der Bohrer nicht mehr in den Topf bzw. in das im Topf angeordnete Substrat hineinragt.

Durch die Verwendung des erfindungsgemäßen Bohrers mit einem wendelförmigen Spiralgang und mindestens einem zusätzlichen Schaufelelement, das oberhalb des Spiralganges angeordnet ist, wird gleichzeitig mit der Erstellung des Pflanzloches auch eine obere Schicht des Substrats aus dem Topf entfernt, so dass dafür kein zusätzlicher Arbeitsschritt erforderlich ist. Ebenso wenig ist es erforderlich, den Aufbau und Ablauf einer bestehenden Topfmaschine zu verändern, da lediglich ein herkömmlicher Bohrer durch den erfindungsgemäßen Bohrer ersetzt werden muss.

Gemäß einer bevorzugten Weiterbildung des erfindungsgemäßen Verfahrens ist vorgesehen, dass nach dem Positionieren des Topfes auf der Topfauflage eine Andrückplatte auf den Topf aufgesetzt wird, die auf ihrer dem Topf zugewandten Unterseite eine Nut aufweist, deren Durchmesser dem Außendurchmesser des oberen Randes des Topfes entspricht. Alternativ zum Aufsetzen der Andrückplatte auf den Topf kann auch der Topf mit der Topfauflage von unten gegen die Unterseite der Andrückplatte verfahren werden. In beiden Fällen führt die Verwendung der Andrückplatte mit der an der Unterseite der Andrückplatte ausgebildeten Nut dazu, dass ein Verdrehen des Topfes beim Bohrvorgang verhindert wird, so dass beim Absenken des sich drehenden Bohrers in den mit Substrat gefüllten Topf wie gewollt eine obere Schicht des Substrats entfernt wird. Die Andrückplatte ist dabei vorzugsweise lösbar an der Bohrstation befestigt, so dass korrespondierend zur gerade verwendeten Topfgröße sowohl ein passender Bohrer als auch eine Andrückplatte mit einer passenden Nut an der Bohrstation befestigt werden kann.

In einem weiteren Schritt wird bei dem erfindungsgemäßen Verfahren die Andrückplatte vom Topf abgehoben oder der Topf gegenüber der Andrückplatte abgesenkt, so dass der Topf dann an eine weitere Arbeitsstation transportiert werden kann. Dort kann eine Jungpflanze in das Pflanzloch eingesetzt und anschließend eine Schicht Rindenmulch oder Kompost auf das Substrats aufgestreut werden, so dass der Topf im Wesentlichen bündig gefüllt ist. Ein nachträgliches manuelles Entfernen bzw. Abtragen eine oberen Schicht an Substrat vor dem Bestreuen mit Rindenmulch ist somit nicht erforderlich, so dass der mit einem solchen Schritt verbundene Zeitaufwand entfällt.

Dadurch, dass bei dem erfindungsgemäßen Verfahren bzw. bei der Verwendung des erfindungsgemäßen Bohrers die oberer Schicht Substrat beim Erstellen des Pflanzlochs aus dem Topf gehoben wird, kann dieses Substrat auf einfache Weise wieder zurück in den Substratbunker verbracht und damit zum Befüllen weiterer Töpfe benutzt werden.

Im Einzelnen gibt es nun eine Vielzahl von Möglichkeiten, den erfindungsgemäße Bohren bzw. das Verfahren auszugestalten und weiterzubilden. Dazu wird verwiesen sowohl auf die den Patentansprüchen 1 und 7 nachgeordneten Patentansprüche als auch auf die nachfolgende Beschreibung von Ausführungsbeispielen in Verbindung mit der Zeichnung. In der Zeichnung zeigen
- Fig. 1: eine perspektivische Darstellung eines erfindungsgemäßen Bohrers,
- Fig. 2: den Bohrer gemäß Fig. 1, ohne Schaufelelemente,
- Fig. 3: ein Ausführungsbeispiel eines ringförmigen Stützelements mit zwei Schaufelelementen, in perspektivischer Darstellung, von der Seite und von oben,
- Fig. 4: eine vereinfachte Darstellung einer Bohrstation, mit einem oberhalb eines Topfes angeordneten Bohrers,
- Fig. 5: eine Darstellung der Bohrstation gemäß Fig. 4, mit einem in den Topf abgesenkten Bohrer,
- Fig. 6: eine Darstellung der Bohrstation gemäß den Fig. 4 und 5, mit wieder angehobenem Bohrer nach dem Bohrvorgang, und
- Fig. 7: einen Topf mit darin eingesetzter Pflanze nach dem in den Fig. 4 bis 6 dargestellten Bohrvorgang.

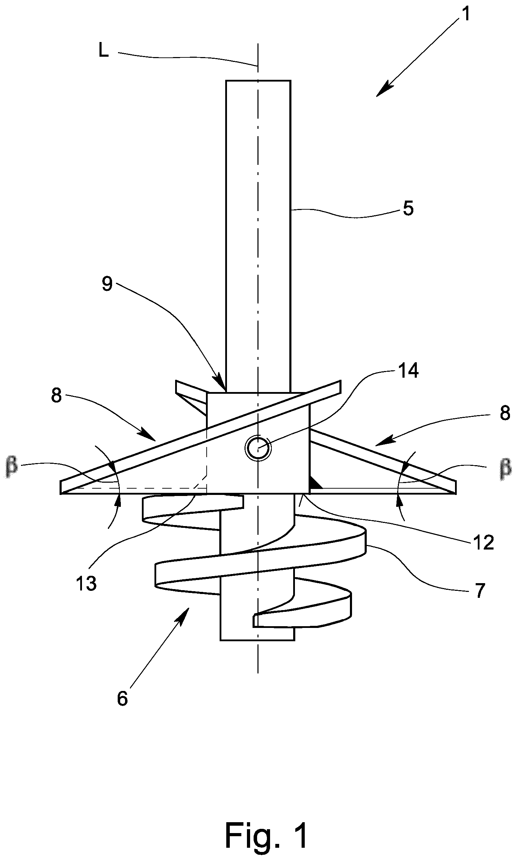

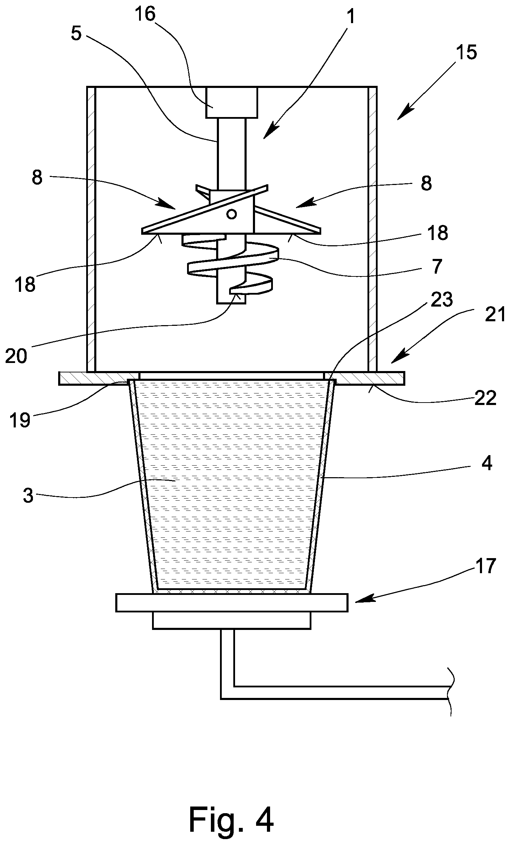

Fig. 1 zeigt ein Ausführungsbeispiel eines erfindungsgemäßen Bohrers 1, der zur maschinellen Erstellung von Pflanzlöchern 2 in mit Substrat 3 gefüllten Töpfen 4 vorgesehen und geeignet ist. Ein Verfahren zur Erstellung eines Pflanzlochs 2 in einem mit Substrat 3 gefüllten Topf 4 mithilfe eines entsprechenden Bohrers 1 wird anhand der Fig. 4 bis 6 erläutert, in denen auch ein mit Substrat 3 gefüllter Topf 4 dargestellt ist.

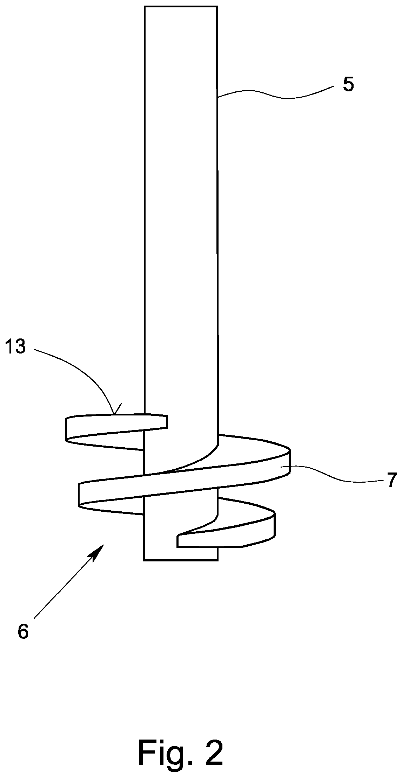

Der Bohrer 1 weist einen Anschlussschaft 5 und einen Bohrkörper 6 mit einem wendelförmigen Spiralgang 7 auf, so dass beim Absenken des Bohrers 1 in einen mit Substrat 3 gefüllten Topf 4 ein Pflanzloch 2 erzeugt wird, dessen Form im Wesentlichen der ideellen Mantelfläche des Bohrkörpers 6 entspricht. Ein grundsätzlich bekannter enrtsprechender Bohrer 1 mit einem Anschlussschaft 5 und einem einen wendelförmigen Spiralgang 7 aufweisenden Bohrkörper 6 ist in Fig. 2 dargestellt.

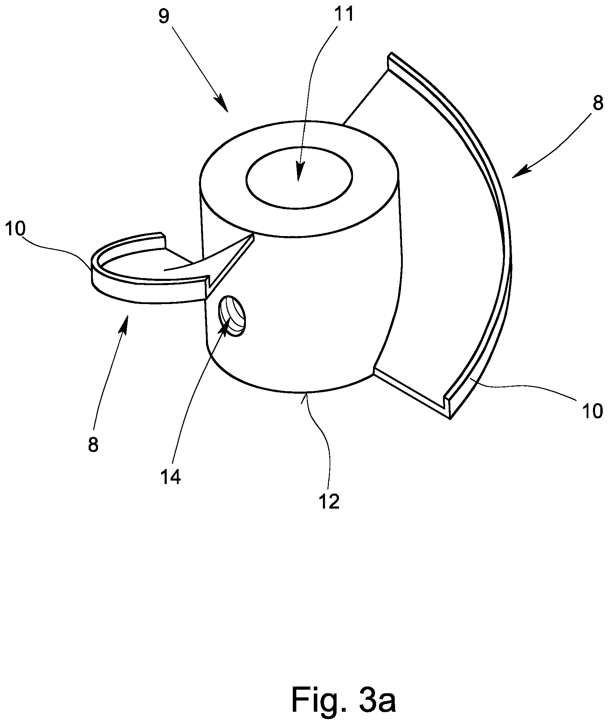

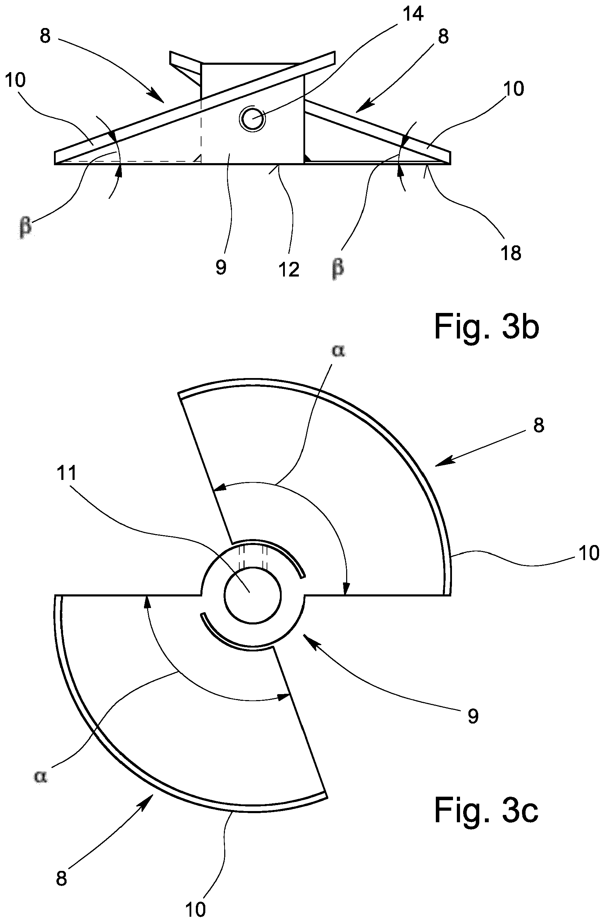

Der in Fig. 1 dargestellte erfindungsgemäße Bohrer 1 weist zusätzlich noch zwei Schaufelelemente 8 auf, die zwischen dem Anschlussschaft 5 und dem Spiralgang 7 angeordnet sind. Wie dabei ersichtlich ist, ist die radiale Erstreckung der beiden Schaufelelemente 8 jeweils größer als die maximale radiale Erstreckung des Spiralgangs 7, jeweils bezogen auf die Längsachse L des Bohrers 1. Außerdem weisen die beiden Schaufelelemente 8 in Umfangsrichtung des Bohrers 1 jeweils einen Neigungswinkel β auf, der bei dem dargestellten Ausführungsbeispiel gemäß der Darstellung in Fig. 3 ca. 20° beträgt. Bei der bevorzugten Ausgestaltung des Bohrers 1 sind die beiden Schaufelelemente 8 an einem ringförmigen Stützelement 9 befestigt, das lösbar an dem Anschlussschaft 5 des Bohrers 1 befestigbar ist. Fig. 2 zeigt somit den in Fig. 1 dargestellten erfindungsgemäßen Bohrer 1, bei dem das Stützelement 9 mit den beiden Schaufelelementen 8 vom Anschlussschaft 5 abmontiert ist.

Fig. 3 zeigt das ringförmige Stützelement 9 mit den beiden Schaufelelementen 8 als separates Bauteil, sowohl in perspektivischer Darstellung (Fig. 3a) als auch von der Seite (Fig. 3b) und in Draufsicht (Fig. 3c). Aus der Draufsicht ist erkennbar, dass die beiden Schaufelelemente 8 kreisbogenförmig ausgebildet sind, wobei der Zentriwinkel α der beiden Schaufelelemente 8 jeweils etwa 110° beträgt. Insbesondere aus Fig. 3a ist darüber hinaus erkennbar, dass die beiden Schaufelelemente 8 an ihrem Außenumfang jeweils einen sich in Richtung der Längsachse L des Bohrers 1 erstreckenden Rand 10 aufweisen. Der Rand 10 dient dabei zur Führung des durch den Bohrer 1 aus dem Topf 4 herausgehobenen Substrats 3 sowie zur Führung der beiden Schaufelelemente 8 an der Innenwandung des Topfes 4 beim Bohrvorgang.

Die Montage des Stützelements 9 mit den beiden Schaufelelementen 8 am Bohrer 1 erfolgt einfach dadurch, dass das Stützelement 9 mit seiner durchgehenden Innenbohrung 11 über den Anschlussschaft 5 geschoben wird, bis die Unterkante 12 des Stützelements 9 auf der ebenen Oberseite 13 des wendelförmigen Spiralgangs 7 aufsitzt. Anschließend wird zur Fixierung des Stützelements 9 eine Schraube in eine im Stützelement 9 ausgebildete Gewindebohrung 14 eingeschraubt, wobei das Ende der Schraube in einer im Anschlussschaft 5 ausgebildeten korrespondierenden Gewindebohrung eingreifen kann oder gegen die Mantelfläche des Anschlussschafts 4 verspannt werden kann.

Nachfolgend wird anhand der Figuren 4 bis 6 das erfindungsgemäße Verfahren zum Erstellen eines Pflanzlochs 2 in einem mit Substrat 3 gefüllten Topf 4 beschrieben. Das Erstellen des Pflanzlochs 2 erfolgt dabei mithilfe eines Bohrers 1, wie er beispielsweise in Fig. 1 dargestellt ist. Der Bohrer 1 ist dazu in einer Bohrstation 15 angeordnet, wozu der Bohrer 1 mit dem freien Ende des Anschlussschafts 5 in einer entsprechenden Aufnahme 16 der Bohrstation 15 befestigt ist. Mittels der Aufnahme 16 ist der Bohrer 1 dabei sowohl um seine Längsachse L drehbar als auch in Richtung seiner Längsachse verfahrbar. Dadurch ist die Position des Bohrers 1 relativ zu dem auf einer Topfauflage 17 positionierten Topf 4 veränderbar.

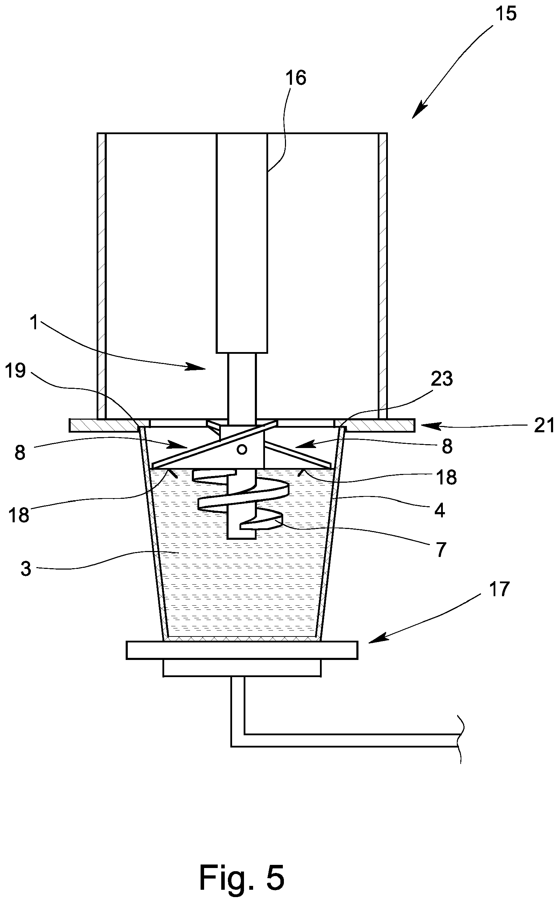

Fig. 4 zeigt den Bohrer 1 in seiner Ausgangsposition, in der sich der Bohrer 1 mit etwas Abstand oberhalb des Topfes 4 befindet. Anschließend wird der sich drehende Bohrer 1 in die in Fig. 5 dargestellte Position abgesenkt, in der sich die Unterkante 18 der beiden Schaufelelemente 8 des Bohrers 1 unterhalb des oberen Randes 19 des Topfes 4 befindet. Der sich drehende Bohrer 1 wird dadurch mit seinem wendelförmigen Spiralgang 7 und mit seinen beiden Schaufelelementen 8 in das im Topf 4 angeordnete Substrat 3 abgesenkt, wodurch in einem Arbeitsschritt ein Pflanzloch 2 erstellt und eine obere Schicht des Substrats 3 aus dem Topf 4 entfernt wird, wie dies in Fig. 5 dargestellt ist.

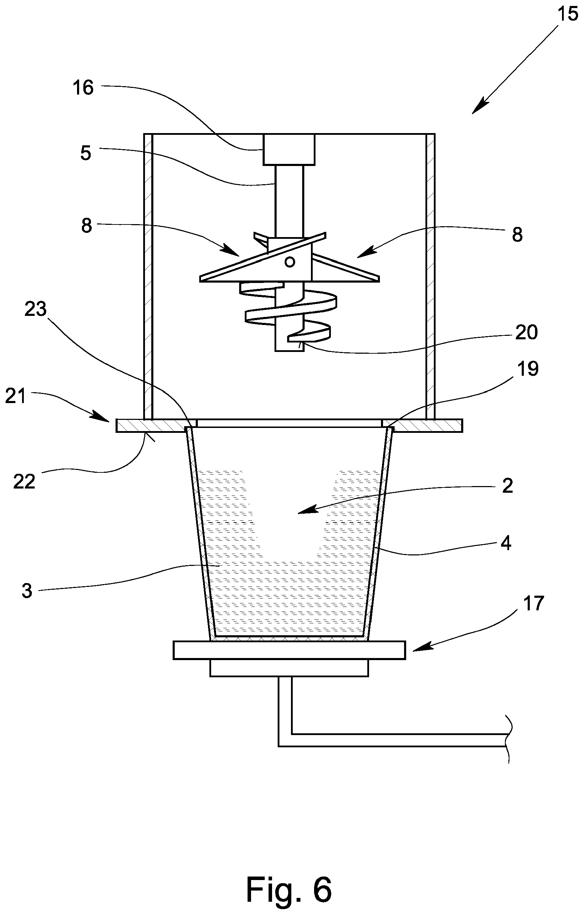

Danach wird der Bohrer 1 wieder in seine Ausgangsposition angehoben, in der sich das freie Ende 20 des Spiralgangs 8 des Bohrers 1 oberhalb des oberen Randes 19 des Topfes 4 befindet. Diese Position ist in Fig. 6 dargestellt, wobei hier auch das zuvor im Substrat 3 erzeugte Pflanzloch 2 ersichtlich ist. Darüber hinaus ist aus Fig. 6 ersichtlich, dass durch die drehende Bewegung der beiden Schaufelelemente 8 des Bohrers 1 eine obere Schicht des Substrats 3 aus dem Topf 4 entfernt worden ist.

Damit sich der Topf 4 beim Absenken des sich drehenden Bohrers 1 nicht mit dem Bohrer 1 mitdreht, ist eine Andrückplatte 21 vorgesehen, die an der Bohrstation 15 befestigt ist. Nach dem Positionieren des Topfes 4 auf der Topfauflage 17 wird der Topf 4 mit Hilfe der beweglichen Topfauflage 17 gegen die Unterseite 22 der Andrückplatte 21 verfahren. Eine an der Unterseite 22 der Andrückplatte 21 ausgebildete Nut 23, deren Durchmesser dem Außendurchmesser des oberen Randes 19 des Topfes 4 entspricht, sorgt dabei dafür, dass der Topf 4 fixiert wird, wodurch ein Verdrehen des Topfes 4 beim Bohrvorgang verhindert wird.

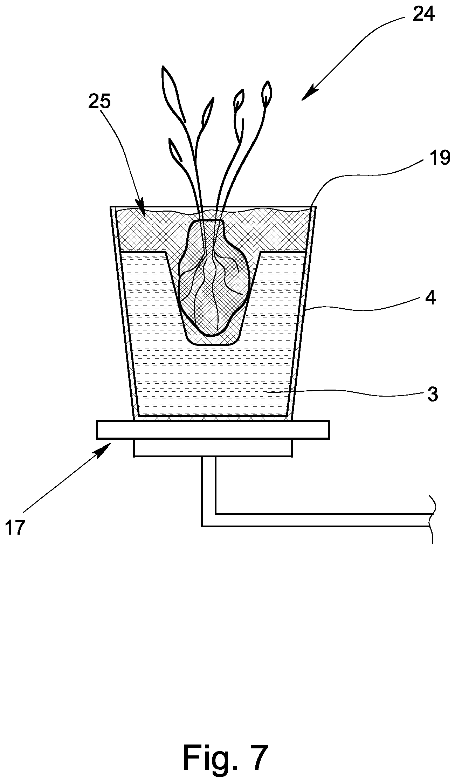

Nachdem mithilfe des Bohrers 1 das Pflanzloch 2 erzeugt und eine obere Schicht Substrat 3 aus dem Topf 4 entfernt worden ist, wird der Topf 4 mit der Topfauflage 17 gegenüber der Andrückplatte 21 abgesenkt, so dass der Topf 4 dann an eine weitere Arbeitsstation transportiert werden kann. Dort kann eine Jungpflanze 24 in das Pflanzloch 2 eingesetzt werden und anschließend - wie aus Fig. 7 ersichtlich - eine Schicht Rindenmulch 25 oder Kompost auf den oberen Rand des Substrats 3 aufgestreut werden, so dass der Topf 4 wieder bündig gefüllt ist. Durch das Aufstreuen von Rindenmulch 25 oder Kompost wird die Ausbildung von Unkraut oder Moos auf der Oberfläche des Substrats 3 verhindert.

## Patentansprüche

1. Bohrer (1) zum maschinellen Erstellen von Pflanzlöchern (2) in mit Substrat (3) gefüllten Töpfen (4), mit einem Anschlussschaft (5) und mit einem Bohrkörper (6), wobei der Bohrkörper (6) einen wendelförmigen Spiralgang (7) aufweist,
**dadurch gekennzeichnet,**
**dass** zwischen dem Anschlussschaft (5) und dem Spiralgang (7) mindestens ein Schaufelelement (8) angeordnet ist, dessen radiale Erstreckung größer als die maximale radiale Erstreckung des Spiralganges (7) ist, und dass das Schaufelelement (8) in Drehrichtung des Bohrers (1) einen Neigungswinkel β größer Null aufweist.

2. Bohrer (1) nach Anspruch 1, **dadurch gekennzeichnet, dass** zwei Schaufelelemente (8) auf einander gegenüber liegenden Seiten der Längsachse (L) des Bohrers (1) zwischen dem Anschlussschaft (5) und dem Spiralgang (7) angeordnet sind.

3. Bohrer (1) nach Anspruch 2, **dadurch gekennzeichnet, dass** die beiden Schaufelelemente (8) kreisbogenförmig ausgebildet sind und der Zentriwinkel α der Schaufelelemte (8) zwischen 80° und 130° beträgt.

4. Bohrer (1) nach Anspruch 2 oder 3, **dadurch gekennzeichnet, dass** die beiden Schaufelelemente (8) auf gleicher Höhe angeordnet sind.

5. Bohrer (1) nach einem der Ansprüche 1 bis 4, **dadurch gekennzeichnet, dass** das mindestens eine Schaufelelement (8) lösbar am Bohrer (1) befestigt ist.

6. Bohrer (1) nach Anspruch 5, **dadurch gekennzeichnet, dass** die beiden Schaufelelemente (8) an einem ringförmigen Stützelement (9) befestigt sind und das Stützelement (9) lösbar mit dem Anschlussschaft (5) befestigt ist, insbesondere auf dem Anschlussschaft (5) aufgeschoben ist.

7. Verfahren zum Erstellen eines Pflanzlochs (2) in einem mit Substrat (3) gefüllten Topf (4) mit einem Bohrer (1) nach einem der Ansprüche 1 bis 6, **gekennzeichnet, durch** folgende Schritte:
• Positionieren des Topfes (4) auf einer Topfauflage (17),
• Absenken des sich drehenden Bohrers (1) in den mit Substrat (3) gefüllten Topf (4) in eine Position, in der sich die Unterkante (18) des mindestens einen Schaufelelements (8) unterhalb des oberen Randes (19) des Topfes (4) befindet, und
• Anheben des Bohrers (1) in eine Position, in der sich das freie Ende (20) des Spiralganges (7) oberhalb des oberen Randes (19) des Topfes (4) befindet.

8. Verfahren nach Anspruch 7, **dadurch gekennzeichnet, dass** nach dem Positionieren des Topfes (4) auf die Topfauflage (17) eine Andrückplatte (21) auf den Topf (4) aufgesetzt oder der Topf (4) gegen die Unterseite (22) einer Andrückplatte (21) verfahren wird, wobei die Andrückplatte (21) auf ihrer dem Topf (4) zugewandten Unterseite (22) eine Nut (23) aufweist, deren Durchmesser dem Außendurchmesser des oberen Randes (19) des Topfes (4) entspricht.

9. Verfahren nach Anspruch 8, **dadurch gekennzeichnet, dass** in einem weiteren Schritt die Andrückplatte (21) von dem Topf (4) angehoben oder der Topf (4) gegenüber der Andrückplatte (21) abgesenkt wird.

## Claims

1. Drill bit (1) for mechanically creating planting holes (2) in pots (4) filled with substrate (3), having a connection shank (5) and having a drilling body (6), wherein the drilling body (6) has a helical spiral thread (7),
**characterized**
**in that** at least one scoop element (8) is arranged between the connection shank (5) and the spiral thread (7), the radial extent of said scoop element (8) being greater than the maximum radial extent of the spiral thread (7), and in that the scoop element (8) has an inclination angle β greater than zero in the direction of rotation of the drill bit (1).

2. Drill bit (1) according to Claim 1, **characterized in that** two scoop elements (8) are arranged between the connection shank (5) and the spiral thread (7) on mutually opposite sides of the longitudinal axis (L) of the drill bit (1).

3. Drill bit (1) according to Claim 2, **characterized in that** the two scoop elements (8) are configured in the form of a circular arc and the centre angle α of the scoop elements (8) is between 80° and 130°.

4. Drill bit (1) according to Claim 2 or 3, **characterized in that** the two scoop elements (8) are arranged at the same height.

5. Drill bit (1) according to one of Claims 1 to 4, **characterized in that** the at least one scoop element (8) is fastened detachably to the drill bit (1).

6. Drill bit (1) according to Claim 5, **characterized in that** the two scoop elements (8) are fastened to an annular support element (9) and the support element (9) is fastened detachably to the connection shank (5), in particular pushed on the connection shank (5).

7. Method for creating a planting hole (2) in a pot (4) filled with substrate (3) using a drill bit (1) according to one of Claims 1 to 6, **characterized by** the following steps of:
- positioning the pot (4) on a pot support (17),
- lowering the rotating drill bit (1) into the pot (4) filled with substrate (3) as far as a position in which the bottom edge (18) of the at least one scoop element (8) is located beneath the upper rim (19) of the pot (4), and
- lifting the drill bit (1) into a position in which the free end (20) of the spiral thread (7) is located above the upper rim (19) of the pot (4).

8. Method according to Claim 7, **characterized in that**, after the pot (4) has been positioned on the pot support (17), a pressure plate (21) is placed on the pot (4) or the pot (4) is moved against the underside (22) of a pressure plate (21), wherein the pressure plate (21) has a groove (23) on its underside (22) facing the pot (4), the diameter of said groove (23) corresponding to the outside diameter of the upper rim (19) of the pot (4).'

9. Method according to Claim 8, **characterized in that**, in a further step, the pressure plate (21) is lifted from the pot (4) or the pot (4) is lowered with respect to the pressure plate (21).

## Revendications

1. Foret (1) pour pratiquer à la machine des trous pour des plantes (2) dans des pots (4) remplis de substrat (3), avec une tige de raccordement (5) et avec un corps de forage (6), dans lequel le corps de forage (6) présente un filet en spirale en forme d'hélice (7),
**caractérisé en ce**
**qu'**au moins un élément d'aube (8) est disposé entre la tige de raccordement (5) et le filet en spirale (7), dont l'extension radiale est plus grande que l'extension radiale maximale du filet en spirale (7), et **en ce que** l'élément d'aube (8) présente dans le sens de rotation du foret (1) un angle d'inclinaison β plus grand que zéro.

2. Foret (1) selon la revendication 1, **caractérisé en ce que** deux éléments d'aube (8) sont disposés sur des côtés opposés l'un à l'autre de l'axe longitudinal (L) du foret (1) entre la tige de raccordement (5) et le filet en spirale (7).

3. Foret (1) selon la revendication 2, **caractérisé en ce que** les deux éléments d'aube (8) sont réalisés en forme d'arc de cercle et l'angle au centre α des éléments d'aube (8) vaut entre 80° et 130°.

4. Foret (1) selon une revendication 2 ou 3, **caractérisé en ce que** les deux éléments d'aube (8) sont disposés à la même hauteur.

5. Foret (1) selon l'une quelconque des revendications 1 à 4, **caractérisé en ce que** ledit au moins un élément d'aube (8) est fixé de façon amovible au foret (1).

6. Foret (1) selon la revendication 5, **caractérisé en ce que** les deux éléments d'aube (8) sont fixés à un élément de support annulaire (9) et l'élément de support (9) est fixé de façon amovible à la tige de raccordement (5), en particulier est glissé sur la tige de raccordement (5).

7. Procédé pour pratiquer un trou pour une plante (2) dans un pot (4) rempli de substrat (3) avec un foret (1) selon l'une quelconque des revendications 1 à 6, **caractérisé par** les étapes suivantes:
• positionner le pot (4) sur un support de pots (17),
• abaisser le foret (1) tournant dans le pot (4) rempli de substrat (3) dans une position, dans laquelle l'arête inférieure (18) dudit au moins un élément d'aube (8) se trouve en dessous du bord supérieur (19) du pot (4), et
• relever le foret (1) dans une position, dans laquelle l'extrémité libre (20) du filet en spirale (7) se trouve au-dessus du bord supérieur (19) du pot (4).

8. Procédé selon la revendication 7, **caractérisé en ce qu'**après le positionnement du pot (4) sur le support de pots (17), on applique une plaque de pression (21) sur le pot (4) ou on déplace le pot (4) contre le côté inférieur (22) d'une plaque de pression (21), dans lequel la plaque de pression (21) présente sur son côté inférieur (22) tourné vers le pot (4) une rainure (23), dont le diamètre correspond au diamètre extérieur du bord supérieur (19) du pot (4).

9. Procédé selon la revendication 8, **caractérisé en ce que** dans une autre étape on soulève la plaque de pression (21) du pot (4) ou on abaisse le pot (4) par rapport à la plaque de pression (21).
